# FASCICULE DE BREVET EUROPEEN

(11) **EP 2 139 769 B1**
(45) Date de publication et mention de la délivrance du brevet: **25.01.2012**
(21) Numéro de dépôt: 08736445.1
(22) Date de dépôt: 22.04.2008
(51) Int. Cl.: B64D 27/26

(54) **ATTACHE D'UN CAISSON DE MAT SUR UNE VOILURE, PINÇANT UN PANNEAU LATERAL DU CAISSON**
BEFESTIGUNG FÜR PYLONKASTEN AN FLÜGELN, FESTKLEMMEN EINER SEITENPLATTE DES KASTENS
FIXATION FOR PYLON BOX ON WINGS, CLAMPING A SIDE PANEL OF THE BOX

(30) Priorité: 23.04.2007 FR 0754636
(43) Date de publication de la demande: 06.01.2010
(73) Titulaire: AIRBUS OPERATIONS, 31060 Toulouse (FR)
(72) Inventeur: GARDES, Pascal, F-31600 Lherm (FR); COMBES, Stéphane, F-31660 Buzet sur Tarn (FR)
(74) Mandataire: Ilgart, Jean-Christophe
(86) Numéro de dépôt international: PCT/EP2008/054838
(87) Numéro de publication internationale: WO 2008/129042

(56) Documents cités:
- EP-A- 1 535 837
- EP-A- 1 538 080
- FR-A- 2 878 229
- US-A- 6 095 456

## Description

### DOMAINE TECHNIQUE

La présente invention se rapporte de façon générale à un ensemble pour aéronef comprenant un élément de voilure formant caisson ainsi qu'un mât d'accrochage d'un turbomoteur sur ledit élément de voilure.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et un élément de voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est équipé d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de plusieurs attaches.

Enfin, le mât est pourvu d'une structure secondaire assurant la ségrégation et le maintien des systèmes tout en supportant des carénages aérodynamiques.

Dans les réalisations de l'art antérieur, le second système de montage interposé entre la structure rigide du mât et la voilure de l'aéronef comporte habituellement deux attaches avant, une attache arrière, ainsi qu'une attache intermédiaire notamment destinée à reprendre les efforts de poussée générés par le turbomoteur associé. Cette attache intermédiaire est par exemple du type « spigot », c'est-à-dire matérialisée par une rotule fixée dans le longeron supérieur de la structure rigide, entre l'attache avant et l'attache arrière, et comprenant en outre un axe ou pion de cisaillement fixé sous la voilure de l'aéronef par l'intermédiaire d'une ferrure d'encastrement, de façon à pouvoir se loger dans la rotule susmentionnée.

Les deux attaches avant, de conception identique ou similaire et espacées latéralement l'une de l'autre, coopèrent respectivement avec les deux panneaux latéraux du mât d'accrochage, en ce sens qu'elles comprennent chacune deux premières ferrures superposées, solidaires du panneau latéral associé. De plus, chaque attache avant comporte au moins une seconde ferrure solidaire de l'élément de voilure, ainsi que des manilles articulées à l'une de leurs extrémités sur la seconde ferrure, et articulées à l'autre extrémité sur les deux premières ferrures précitées. A titre indicatif, il est noté que les deux premières ferrures superposées de chaque attache avant se situent à l'intérieur du caisson, en étant recouvertes par leur panneau latéral associé.

Le document EP 1 535 837 est considéré comme le document de l'art antérieur le plus proche.

En raison de la taille toujours plus importante des turbomoteurs portés par les mâts d'accrochage, les efforts devant transiter entre un mât et son élément de voilure correspondant deviennent également de plus en plus conséquents, en particulier en ce qui concerne les efforts verticaux liés à la reprise du moment s'exerçant selon un axe longitudinal du mât. A cet égard, il est noté que l'augmentation de l'écartement latéral des deux attaches avant constitue une solution permettant de diminuer les efforts transitant dans chacune de ces attaches avant pour la reprise du moment s'exerçant selon l'axe longitudinal du mât. Néanmoins, en raison de la position des premières ferrures sur le mât, cette augmentation de l'écartement conduit inévitablement à augmenter la largeur du caisson, donc à générer des perturbations aérodynamiques pénalisant le rendement global de l'aéronef.

### EXPOSÉ DE L'INVENTION

L'invention a donc pour but de proposer un ensemble pour aéronef remédiant au moins partiellement aux problèmes mentionnés ci-dessus, relatifs aux réalisations de l'art antérieur.

Pour ce faire, l'invention a pour objet un ensemble pour aéronef comprenant un élément de voilure formant caisson ainsi qu'un mât d'accrochage d'un turbomoteur sur ledit élément de voilure, le mât d'accrochage comportant une structure rigide formant caisson défini extérieurement par un premier longeron, un second longeron, ainsi que deux panneaux latéraux disposés de part et d'autre desdits premier et second longerons, l'ensemble étant également pourvu de moyens d'accrochage de ladite structure rigide sur l'élément de voilure, les moyens d'accrochage étant munis de deux attaches avant coopérant respectivement avec lesdits deux panneaux latéraux, chaque attache avant comprenant deux premières ferrures solidaires du panneau latéral associé, au moins une seconde ferrure solidaire de l'élément de voilure, ainsi que des manilles articulées à l'une de leurs extrémités sur ladite seconde ferrure et articulées à l'autre extrémité sur lesdites deux premières ferrures. Selon l'invention, pour chaque attache avant, lesdites deux premières ferrures sont agencées respectivement de part et d'autre de leur panneau latéral associé.

Ainsi, en plaçant l'une des deux premières ferrures d'attache avant extérieurement par rapport au panneau latéral associé, et donc extérieurement par rapport au caisson, il en résulte avantageusement une augmentation de l'écartement latéral des deux attaches avant, sans pour autant générer une augmentation de la largeur de ce caisson. Par conséquent, la solution originale retenue permet d'assurer la reprise des efforts importants transitant entre le mât et son élément de voilure correspondant, et en particulier celle des efforts verticaux liés à la reprise du moment s'exerçant selon l'axe longitudinal du mât, sans générer de pénalités aérodynamiques. Par ailleurs, l'augmentation de l'entraxe entre les deux attaches avant permet également de diminuer le dimensionnement de ces attaches devant reprendre des efforts moins importants, ce qui conduit avantageusement à un gain de masse non négligeable.

En outre, les deux premières ferrures de chaque attache avant, pinçant le panneau latéral associé, prennent ce dernier en double cisaillement, pour un meilleur passage des efforts en direction de l'élément de voilure.

Enfin, pour chaque attache avant, le fait de prévoir deux premières ferrures permet d'assurer la fonction dite « Fail Safe » de transmission des efforts vers l'élément de voilure, puisqu'en cas de défaillance survenant sur l'une des deux premières ferrures, les efforts peuvent alors transiter par l'autre de ces premières ferrures.

De préférence, pour chaque attache avant, lesdites deux premières ferrures constituent respectivement une première ferrure interne et une première ferrure externe, ces deux ferrures constituant avec le panneau latéral associé un ensemble d'éléments superposés, de préférence en contact deux à deux pour une meilleure compacité.

De préférence, ledit premier longeron de la structure rigide formant caisson est agencé entre les deux premières ferrures internes appartenant respectivement aux deux attaches avant, et s'étend d'une seule pièce vers l'avant et vers l'arrière à partir desdites deux attaches avant. A cet égard, il est noté que si le premier longeron est de préférence prévu, comme cela vient d'être mentionné, pour s'étendre d'une seule pièce de part et d'autre des deux attaches avant selon la direction longitudinale, il s'étend encore plus préférentiellement d'une seule pièce sur toute la longueur du caisson. Néanmoins, d'une façon plus générale, on prévoit qu'il est réalisé d'un seul tenant, ou bien par l'assemblage de sections jointives, qui peuvent éventuellement être légèrement inclinées les unes par rapport aux autres. Toutefois, dans ce dernier cas, on fait toujours de préférence en sorte qu'une partie de ce longeron s'étende d'une seule pièce sur une portion de la longueur du caisson, vers l'avant et vers l'arrière à partir des deux attaches avant. Cela permet une meilleure continuité dans la reprise des efforts par le caisson, au niveau des deux attaches avant.

De préférence, ledit premier longeron de la structure rigide formant caisson présente deux renfoncements latéraux pour loger respectivement lesdites deux premières ferrures internes. Dans un tel cas, les renfoncements sont avantageusement de profondeur limitée, étant donné que chacun d'eux ne loge qu'une seule des deux premières ferrures de l'attache avant associée.

De préférence, pour chaque attache avant, la première ferrure interne est logée entre son panneau latéral associé et une nervure transversale intérieure appartenant à la structure rigide formant caisson.

Toujours de manière préférentielle, pour chaque attache avant, ladite seconde ferrure est solidaire d'un longeron avant de l'élément de voilure.

De manière préférentielle, les moyens d'accrochage comprennent également une attache intermédiaire et une attache arrière, même si une réalisation dans laquelle il ne serait pas prévu d'attache intermédiaire pourrait être envisagée, sans sortir du cadre de l'invention.

Dans le cas préféré où le mât est destiné à assurer la suspension du moteur sous la voilure de l'aéronef, cas dans lequel le mât se situe donc également sous l'élément de voilure, ledit premier longeron constitue alors un longeron supérieur dudit caisson. Dans l'autre cas où le mât est destiné à porter le moteur au-dessus de la voilure de l'aéronef, le premier longeron constitue alors un longeron inférieur du caisson.

L'invention a également pour objet un aéronef comprenant au moins un ensemble tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble pour aéronef selon un mode de réalisation préféré de la présente invention ;
- la figure 2 représente une vue partielle en perspective de l'ensemble pour aéronef montré sur la figure 1 ; et
- la figure 3 représente une vue en coupe passant par le plan P1 de la figure 2.

### EXPOSÉ DÉTAILLÉ DE MODES DE RÉALISATION PRÉFÉRÉS

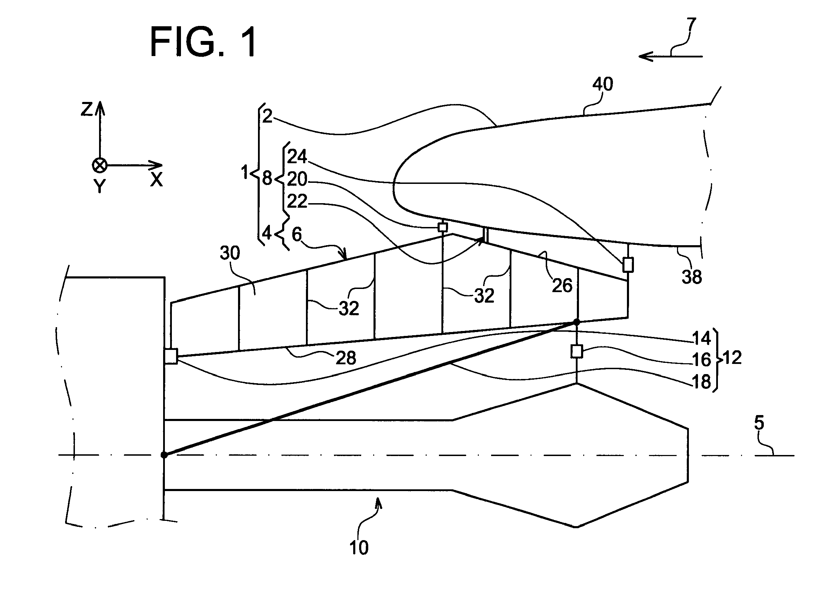

En référence à la figure 1, on voit un ensemble 1 pour aéronef selon un mode de réalisation préféré de la présente invention.

Globalement, cet ensemble 1 comprend un élément de voilure 2 tel qu'une aile, un mât d'accrochage 4 d'un turbomoteur 10 tel qu'un turboréacteur, ainsi que des moyens d'accrochage 8 d'une structure rigide 6 formant caisson du mât 4, sous l'élément de voilure 2.

Par ailleurs, sur cette figure 1, il est également représenté à titre indicatif des moyens d'accrochage 12 interposés entre la structure rigide 6 et le turbomoteur 10, ces moyens 12 étant constitués d'une ou plusieurs attaches moteur avant 14, une attache moteur arrière 16, et d'un dispositif de reprise des efforts de poussée 18 essentiellement muni de bielles latérales de reprise.

Ces moyens d'accrochage 12 sont réalisés de manière classique, et ne seront de ce fait pas davantage décrits.

Dans toute la description qui va suivre, par convention, on appelle X la direction longitudinale du mât 4 qui est également assimilable à la direction longitudinale du turboréacteur 10, cette direction X étant parallèle à un axe longitudinal 5 de ce turboréacteur 10. D'autre part, on appelle Y la direction orientée transversalement par rapport au mât 4 et également assimilable à la direction transversale du turboréacteur 10, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les turboréacteurs 10, cette direction étant représentée schématiquement par la flèche 7.

Toujours en référence à la figure 1, on peut voir que seule la structure rigide formant caisson 6 du mât d'accrochage 4 a été représentée, accompagnée des moyens d'accrochage 8 de cette structure rigide sous l'élément de voilure 2. Les autres éléments constitutifs non-représentés de ce mât 4, du type structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De la même manière, il est indiqué que la structure rigide 6 peut globalement être similaire à celles rencontrées dans les dispositifs de l'art antérieur. Toujours en référence à la figure 1, on peut apercevoir que cette structure 6 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres.

En revanche, les moyens d'accrochage 8, situés globalement sur la partie arrière de la structure rigide 6, sont spécifiques à la présente invention et vont donc être présentés de façon détaillée ci-après.

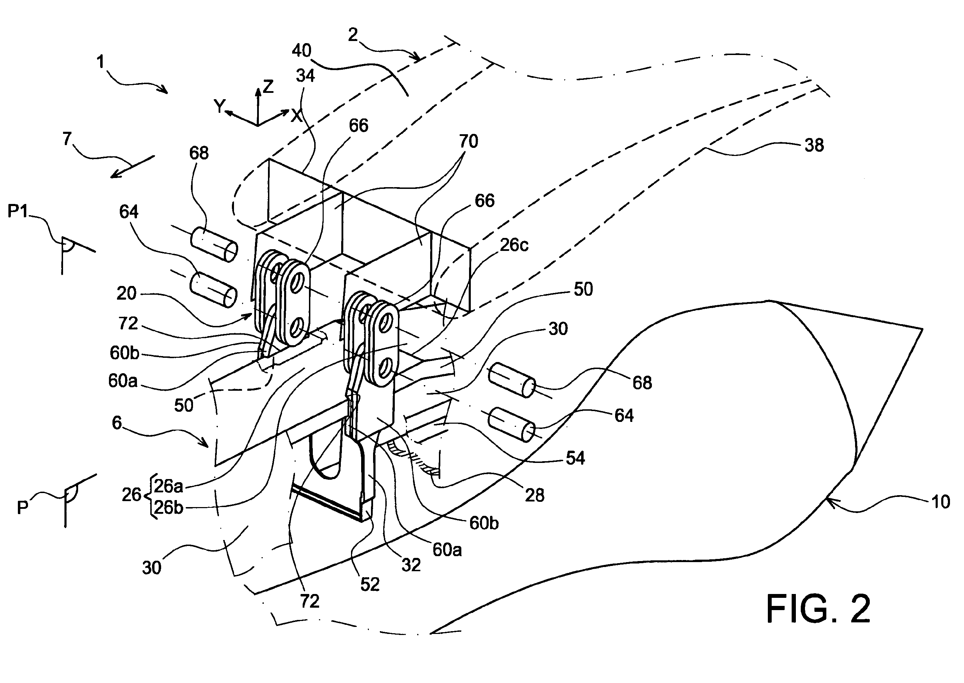

De façon générale, les moyens d'accrochage 8 sont constitués de deux attaches avant 20, d'une attache intermédiaire 22 ainsi que d'une attache arrière 24, l'attache intermédiaire 22 étant placée entre les attaches avant et arrière 20, 24, mais de préférence agencée à proximité de l'attache avant 20. Comme cela sera exposé en détails ci-dessous, les deux attaches avant 20, décalées transversalement l'une de l'autre, relient le longeron supérieur 26 de la structure rigide ou caisson 6, à un longeron horizontal avant faisant partie intégrante de l'élément de voilure formant caisson, ce longeron (non représenté sur la figure 1 et portant la référence 34 sur la figure 2) s'étendant sensiblement selon une direction principale longitudinale de cette aile 2. L'attache intermédiaire 22 relie quant à elle également le longeron supérieur 26 du caisson 6 au longeron horizontal avant 34 de l'aile 2, tandis que l'attache arrière 24 relie une extrémité arrière du longeron supérieur 26 du caisson 6, à l'élément de voilure 2.

Ici encore, il est noté que l'élément de voilure 2 est du type connu de l'homme du métier, c'est-à-dire prenant la forme d'un caisson constitué par l'assemblage de longerons et de nervures définissant une ossature fermée par un revêtement d'intrados 38 et un revêtement d'extrados 40.

Avec les moyens d'accrochage 8 conçus de préférence pour être de nature isostatique, les efforts s'exerçant selon la direction longitudinale X sont repris exclusivement par l'attache intermédiaire 22, les efforts s'exerçant selon la direction transversale Y sont repris conjointement par l'attache intermédiaire 22 et l'attache arrière 24, et les efforts s'exerçant selon la direction verticale Z sont repris conjointement par les attaches avant 20 et l'attache arrière 24.

D'autre part, la reprise du moment s'exerçant selon la direction X est assurée verticalement, uniquement par les deux attaches avant 20, tandis que la reprise des moments s'exerçant selon la direction Y est assurée verticalement conjointement par les attaches avant 20 et arrière 24. Enfin, la reprise du moment s'exerçant selon la direction Z est assurée transversalement par l'attache intermédiaire 22 et l'attache arrière 24.

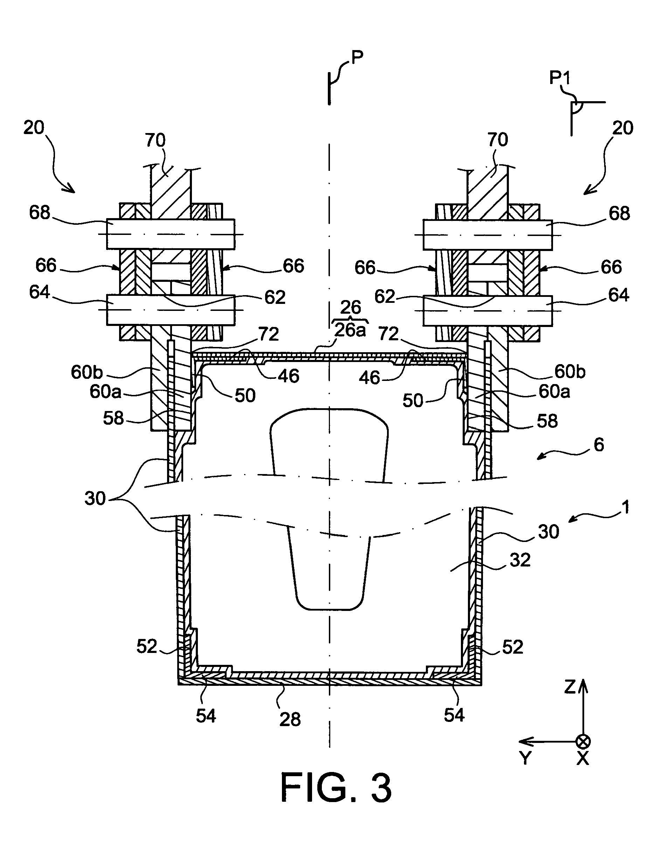

En référence aux figures 2 et 3, on peut voir que la structure rigide formant caisson 6 comprend une nervure transversale 32 dont l'une des fonctions réside dans la formation d'un support de fixation pour les attaches avant 20. Cette nervure 32 prend grossièrement la forme d'un rectangle, partiellement évidé en son centre. Au niveau de chacun de ses coins, elle présente un évidement en forme d'équerre, permettant de loger des cornières de support des longerons 26, 28 et des panneaux latéraux 30. Plus précisément, le caisson comprend dans sa partie supérieure deux renfoncements en forme d'équerre 46, chacun logeant une cornière supérieure 50 s'étendant sensiblement selon la direction X, de préférence d'un bout à l'autre du caisson 6. De la même manière, le caisson comprend dans sa partie inférieure deux renfoncements en forme d'équerre 52, chacun logeant une cornière inférieure 54 s'étendant sensiblement selon la direction X, de préférence d'un bout à l'autre du caisson 6.

Au niveau de cette partie inférieure du caisson, le flanc latéral de chaque cornière 54 se situe dans la continuité d'un flanc latéral de la nervure 32, de manière à ce qu'ils constituent conjointement une même surface de support pour le panneau latéral associé 30, sensiblement orientée selon un plan XZ. De même, le flanc inférieur de chaque cornière 54 se situe dans la continuité d'un flanc inférieur de la nervure 32, de manière à ce qu'ils constituent conjointement une même surface de support pour le longeron inférieur 28, sensiblement orientée selon un plan XY.

Au niveau de la partie supérieure du caisson, l'agencement proposé diffère sensiblement de celui rencontré dans la partie inférieure, car il intègre la mise en place des attaches avant 20.

Néanmoins, le flanc supérieur de chaque cornière 50 se situe également dans la continuité d'un flanc supérieur de la nervure 32, de manière à ce qu'ils constituent conjointement une même surface de support pour le longeron supérieur 26, sensiblement orientée selon un plan XY.

Par contre, le flanc latéral de chaque cornière 50 se situe dans la continuité d'un autre renfoncement 58 de la nervure 32, de manière à ce qu'ils constituent conjointement une même surface de support pour une ferrure de l'attache avant 20 correspondante, sensiblement orientée selon un plan XZ et donc décalée vers l'intérieur par rapport au flanc latéral de la nervure.

L'une des deux attaches avant 20 va à présent être décrite, étant entendu que l'autre est de préférence sensiblement identique ou similaire. Plus précisément, les deux attaches 20 sont sensiblement symétriques par rapport à un plan P orienté selon les directions X et Z, ce plan P constituant également un plan de symétrie pour l'ensemble du caisson 6.

Tout d'abord, l'attache avant 20 comprend deux premières ferrures 60a, 60b, servant au raccordement sur le caisson 6. Parmi ces ferrures, on compte une première ferrure interne 60a au contact de la surface définie conjointement par le renfoncement 58 et le flan latéral de la cornière supérieure 50 associée. La surface latérale extérieure de la ferrure 60a se situe dans la continuité du flanc latéral de la nervure 32, de manière à ce qu'ils constituent conjointement une même surface de support pour le panneau latéral associé 30, sensiblement orientée selon un plan XZ. Ainsi, la surface latérale extérieure de la ferrure 60a se situe dans le même plan que celui du flanc latéral de la cornière inférieure 54.

Une première ferrure externe 60b est prévue pour être plaquée contre le panneau latéral 30, extérieurement par rapport à celui-ci. Elle se situe sensiblement en regard de la première ferrure interne 60a, bien qu'étant séparée de celle-ci par le panneau 30 qu'elles prennent conjointement en double cisaillement. Ainsi, comme cela est le mieux visible sur la figure 3, les éléments 60a, 30, 60b sont sensiblement plans, orientés selon les directions X et Z, et empilés selon la direction Y en étant de préférence en contact deux à deux.

Les deux premières ferrures 60a, 60b, pinçant le panneau 30, présentent une extrémité supérieure faisant saillie du caisson vers le haut, et définissant un orifice transversal 62 traversé par un axe 64. Cet axe 64, orienté transversalement et prenant par exemple la forme d'un axe double, traverse également l'extrémité inférieure de manilles verticales 66, également dénommées biellettes. De préférence, les manilles articulées 66 sont disposées de part et d'autre de l'ensemble formé par les deux premières ferrures 60a, 60b, comme visible sur la figure 3.

Les extrémités supérieures des deux premières ferrures 60a, 60b sont de préférence en contact, alors que leurs extrémités inférieures sont nécessairement espacées afin de loger entre elles le panneau latéral 30, pour un pincement de ce dernier. A cet égard, il serait alternativement possible de prévoir le deux ferrures 60a, 60b sous la forme d'une pièce d'un seul tenant, du type chape orientée vers le bas.

Un autre axe 68, également orienté transversalement et prenant par exemple la forme d'un axe double, traverse l'extrémité supérieure des manilles verticales 66, ainsi qu'une seconde ferrure 70 orientée selon un plan XZ et raccordée fixement sur le longeron avant 34 de l'aile. Cette seconde ferrure 70, logée dans le caisson d'aile, est agencée entre les manilles 66 traversant le revêtement d'intrados 38.

Toujours en référence aux figures 2 et 3 sur lesquelles les attaches intermédiaire et arrière n'ont pas été représentées, on peut voir que le longeron supérieur 26 se décompose par exemple en deux portions 26a, 26b légèrement inclinées l'une par rapport à l'autre, raccordées fixement l'une à l'autre au niveau d'une jonction 26c formant angle de caisson.

Néanmoins, au niveau des attaches avant 20 décalées vers l'avant par rapport à cette jonction 26c, la portion 26a située entre les deux premières ferrures internes 60a s'étend d'une seule pièce vers l'avant et vers l'arrière à partir des ces deux attaches avant 20, pour une meilleure continuité dans la reprise des efforts. Ainsi, la portion 26a s'étend d'une seule pièce entre l'extrémité avant du caisson et la jonction 26c formant angle de caisson, située en arrière par rapport aux attaches avant 20.

De plus, pour loger chacune des deux premières ferrures internes 60a, la portion de longeron supérieure 26a présente de part et d'autre de celui-ci deux renfoncements latéraux 72, de profondeur sensiblement identique à l'épaisseur de la première ferrure interne 60a. Naturellement, pour une continuité globale du caisson 6, des renfoncements analogues sont prévus sur les cornières supérieures 50, localement au niveau du passage des premières ferrures internes 60a, ainsi que sur la nervure transversale 32 tel que cela a été présenté ci-dessus.

Bien entendu, diverses modifications peuvent être apportées par l'homme du métier à l'ensemble pour aéronef qui vient d'être décrit, uniquement à titre d'exemple non limitatif. A cet égard, on peut notamment indiquer qui si l'ensemble a été présenté dans une configuration adaptée pour que le moteur puisse être suspendu sous la voilure de l'aéronef, cet ensemble pourrait également se présenter dans une configuration différente lui permettant de monter le moteur au-dessus de cette même voilure.

## Revendications

1. Ensemble (1) pour aéronef comprenant un élément de voilure (2) formant caisson ainsi qu'un mât d'accrochage (4) d'un turbomoteur (10) sur ledit élément de voilure, le mât d'accrochage (4) comportant une structure rigide (6) formant caisson défini extérieurement par un premier longeron (26), un second longeron (28), ainsi que deux panneaux latéraux (30) disposés de part et d'autre desdits premier et second longerons, l'ensemble étant également pourvu de moyens d'accrochage (8) de ladite structure rigide (6) sur l'élément de voilure (2), les moyens d'accrochage (8) étant munis de deux attaches avant (20) coopérant respectivement avec lesdits deux panneaux latéraux (30), chaque attache avant comprenant deux premières ferrures (60a, 60b) solidaires du panneau latéral associé (30), au moins une seconde ferrure (70) solidaire de l'élément de voilure (2), ainsi que des manilles (66) articulées à l'une de leurs extrémités sur ladite seconde ferrure et articulées à l'autre extrémité sur lesdites deux premières ferrures,
**caractérisé en ce que** pour chaque attache avant (20), lesdites deux premières ferrures (60a, 60b) sont agencées respectivement de part et d'autre de leur panneau latéral associé (30).

2. Ensemble (1) pour aéronef selon la revendication 1, **caractérisé en ce que** pour chaque attache avant (20), lesdites deux premières ferrures constituent respectivement une première ferrure interne (60a) et une première ferrure externe (60b).

3. Ensemble (1) pour aéronef selon la revendication 2, **caractérisé en ce que** ledit premier longeron (26) de la structure rigide (6) formant caisson est agencé entre les deux premières ferrures internes (60a, 60a) appartenant respectivement aux deux attaches avant, et **en ce qu'**il s'étend d'une seule pièce vers l'avant et vers l'arrière à partir desdites deux attaches avant (20).

4. Ensemble (1) pour aéronef selon la revendication 3, **caractérisé en ce que** ledit premier longeron (26) de la structure rigide (6) formant caisson présente deux renfoncements latéraux (72) pour loger respectivement lesdites deux premières ferrures internes (60a, 60a).

5. Ensemble (1) pour aéronef selon l'une quelconque des revendications 2 à 4, **caractérisé en ce que** pour chaque attache avant (20), la première ferrure interne (60a) est logée entre son panneau latéral associé et une nervure transversale intérieure (32) appartenant à la structure rigide (6) formant caisson.

6. Ensemble (1) pour aéronef selon l'une quelconque des revendications précédentes, **caractérisé en ce que** pour chaque attache avant (20), ladite seconde ferrure (70) est solidaire d'un longeron avant (34) de l'élément de voilure (2).

7. Ensemble (1) pour aéronef selon l'une quelconque des revendications précédentes, **caractérisé en ce que** les moyens d'accrochage (8) comprennent également une attache intermédiaire (22) et une attache arrière (24).

8. Ensemble (1) pour aéronef selon l'une quelconque des revendications précédentes, **caractérisé en ce que** ledit premier longeron (26) constitue un longeron supérieur dudit caisson.

9. Aéronef **caractérisé en ce qu'**il comporte au moins un ensemble (1) selon l'une quelconque des revendications précédentes.

## Claims

1. An aircraft assembly (1) comprising a wing element (2) forming a caisson and an attachment pylon (4) of a turboengine (10) on said wing element, the attachment pylon (4) comprising a rigid structure (6) forming a caisson defined externally by a first longeron (26), a second longeron (28), as well as two lateral panels (30) arranged on either side of said first and second longerons, the assembly also being provided with attachment means (8) of said rigid structure (6) on the wing element (2), the attachment means (8) being fitted with two front attachments (20) cooperating respectively with said two lateral panels (30) , each front attachment comprising two first fittings (60a, 60b) solid with the associated lateral panel (30), at least one second fitting (70) solid with the wing element (2), and shackles (66) articulated by one of their ends to said second fitting and articulated by the other end to said two first fittings,
**characterised in that** for each front attachment (20), said two first fittings (60a, 60b) are arranged respectively on either side of their associated lateral panel (30).

2. The aircraft assembly (1) as claimed in Claim 1, **characterised in that** for each front attachment (20), said two first fittings respectively constitute a first internal fitting (60a) and a first external fitting (60b).

3. The aircraft assembly (1) as claimed in Claim 2, **characterised in that** said first longeron (26) of the rigid structure (6) forming a caisson is arranged between the two first internal fittings (60a, 60a) belonging respectively to the two front attachments, and **in that** it extends from a single piece towards the front and towards the rear from said two front attachments (20).

4. The aircraft assembly (1) as claimed in Claim 3, **characterised in that** said first longeron (26) of the rigid structure (6) forming a caisson has two lateral reinforcements (72) for housing respectively said two first internal fittings (60a, 60a).

5. The aircraft assembly (1) as claimed in any one of Claims 2 to 4, **characterised in that** for each front attachment (20), the first internal fitting (60a) is housed between its associated lateral panel and an internal transversal groove (32) belonging to the rigid structure (6) forming a caisson.

6. The aircraft assembly (1) as claimed in any one of the preceding claims, **characterised in that** for each front attachment (20), said second fitting (70) is solid with a front longeron (34) of the wing element (2).

7. The aircraft assembly (1) as claimed in any one of the preceding claims, **characterised in that** the attachment means (8) also comprise an intermediate attachment (22) and a rear attachment (24).

8. The aircraft assembly (1) as claimed in any one of the preceding claims, **characterised in that** said first longeron (26) constitutes an upper longeron of said caisson.

9. Aircraft **characterised in that** it comprises at least one assembly (1) as claimed in any one of the preceding claims.

## Patentansprüche

1. System (1) für ein Luftfahrzeug, das ein einen Kasten bildendes Tragflügelelement (2) sowie ein Aufhängesystem (4) für ein Turbotriebwerk (10) an dem Tragflügelelement umfasst, wobei das Aufhängesystem (4) eine starre Struktur (6) aufweist, die einen Kasten bildet, der von außen durch einen ersten Längsträger (26), einen zweiten Längsträger (28) sowie zwei Seitenplatten (30), die jeweils auf einer der beiden Seiten des ersten und des zweiten Längsträgers angebracht sind, festgelegt ist, wobei das System auch Aufhängemittel (8) für die starre Struktur (6) an dem Tragflügelelement (2) aufweist, wobei die Aufhängemittel (8) mit zwei vorderen Aufhängungen (20), die jeweils mit den zwei Seitenplatten (30) zusammenwirken, ausgestattet sind, wobei jede vordere Aufhängung zwei erste Beschläge (60a, 60b), die mit der damit verbundenen Seitenplatte (30) formschlüssig sind, mindestens einen zweiten Beschlag (70), der mit dem Tragflügelelement (2) formschlüssig ist, sowie Schwingarme (66), die an dem einen ihrer Enden mit dem zweiten Beschlag gelenkig verbunden sind und an dem anderen Ende mit den beiden ersten Beschlägen gelenkig verbunden sind, umfasst,
**dadurch gekennzeichnet, dass** für jede vordere Aufhängung (20) die beiden ersten Beschläge (60a, 60b) jeweils auf der einen bzw. der anderen Seite der damit verbundenen Seitenplatte (30) angeordnet sind.

2. System (1) für ein Luftfahrzeug nach Anspruch 1, **dadurch gekennzeichnet, dass** für jede vordere Aufhängung (20) die beiden ersten Beschläge jeweils einen ersten inneren Beschlag (60a) bzw. einen ersten äußeren Beschlag (60b) bilden.

3. System (1) für ein Luftfahrzeug nach Anspruch 2, **dadurch gekennzeichnet, dass** der erste Längsträger (26) der einen Kasten bildenden starren Struktur (6) zwischen den beiden ersten inneren Beschlägen (60a, 60a), die jeweils zu den beiden vorderen Aufhängungen gehören, angeordnet ist und dass er sich in einem einzigen Stück - ausgehend von den beiden Vorderen Aufhängungen (20) - nach vorne und nach hinten erstreckt.

4. System (1) für ein Luftfahrzeug nach Anspruch 3, **dadurch gekennzeichnet, dass** der erste Längsträger (26) der einen Kasten bildenden starren Struktur (6) zwei seitliche Eintiefungen (72) zur Aufnahme von jeweils den beiden ersten inneren Beschlägen (60a, 60a) aufweist.

5. System (1) für ein Luftfahrzeug nach einem der Ansprüche 2 bis 4, **dadurch gekennzeichnet, dass** für jede vordere Aufhängung (20) der erste innere Beschlag (60a) zwischen der mit dieser verbundenen Seitenfläche und einer inneren Querrippe (32), die zu der einen Kasten bildenden starren Struktur (6) gehört, sitzt.

6. System (1) für ein Luftfahrzeug nach einem der vorhergehenden Ansprüche, **dadurch gekennzeichnet, dass** für jede vordere Aufhängung (20) der zweite Beschlag (70) mit einem vorderen Träger (34) des Tragflügelelements (2) formschlüssig ist.

7. System (1) für ein Luftfahrzeug nach einem der vorhergehenden Ansprüche, **dadurch gekennzeichnet, dass** die Aufhängemittel (8) auch eine Zwischenaufhängung (22) und eine hintere Aufhängung (24) umfassen.

8. System (1) für ein Luftfahrzeug nach einem der vorhergehenden Ansprüche, **dadurch gekennzeichnet, dass** der erste Längsträger (26) einen oberen Längsträger des Kastens bildet.

9. Luftfahrzeug, **dadurch gekennzeichnet, dass** es mindestens ein System (1) nach einem der vorhergehenden Ansprüche aufweist.
